(19) Europäisches Patentamt
European Patent Office
Office européen des brevets

(11) **EP 2 384 526 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(51) Int Cl.:
**H01S 3/23** (2006.01)     **H01S 3/00** (2006.01)

(21) Anmeldenummer: **09801414.5**

(22) Anmeldetag: **23.12.2009**

(86) Internationale Anmeldenummer:
**PCT/EP2009/009247**

(87) Internationale Veröffentlichungsnummer:
**WO 2010/075999 (08.07.2010 Gazette 2010/27)**

(54) **VORRICHTUNG ZUM VERSTÄRKEN VON LICHTIMPULSEN**

DEVICE FOR AMPLIFYING LIGHT IMPULSES

DISPOSITIF POUR L'AMPLIFICATION D'IMPULSIONS LUMINEUSES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.12.2008 DE 102008063368**

(43) Veröffentlichungstag der Anmeldung:
**09.11.2011 Patentblatt 2011/45**

(73) Patentinhaber:
• **Fraunhofer-Gesellschaft zur Förderung der angewandten Forschung e.V.
80686 München (DE)**
• **Friedrich-Schiller-Universität Jena
07743 Jena (DE)**

(72) Erfinder:
• **LIMPERT, Jens
07751 Jena (DE)**
• **SEISE, Enrico
07639 Tautenhain (DE)**
• **SCHIMPF, Damian
Cambridge, MA 02139 (US)**
• **RÖSER, Fabian
01097 Dresden (DE)**
• **TÜNNERMANN, Andreas
99425 Weimar (DE)**

(74) Vertreter: **Isfort, Olaf
Schneiders & Behrendt
Rechtsanwälte - Patentanwälte
Huestrasse 23
44787 Bochum (DE)**

(56) Entgegenhaltungen:
**WO-A2-2006/057655     US-A1- 2004 000 942**

• **SEISE E ET AL: "Peak-power scaling induced by spectral clipping in nonlinear CPA-systems" 14. Juni 2009 (2009-06-14), LASERS AND ELECTRO-OPTICS 2009 AND THE EUROPEAN QUANTUM ELECTRONICS CONFERENCE. CLEO EUROPE - EQEC 2009. EUROPEAN CONFERENCE ON, IEEE, PISCATAWAY, NJ, USA, PAGE(S) 1 , XP031501957 ISBN: 9781424440795 das ganze Dokument**
• **URSESCU D ET AL: "Spectrally clipped pulses analysis in a CPA laser system" UNIVERSITY 'POLITEHNICA' OF BUCHAREST SCIENTIFIC BULLETIN. SERIES A: APPLIED MATHEMATICS AND PHYSICS,, Bd. 70, Nr. 4, 1. Januar 2008 (2008-01-01) , Seiten 49-56, XP009130696 ISSN: 1223-7027**
• **SCHIMPF D.N. ET AL.: "Controlling the influence of SPM in fiber-based chirped-pulse amplification systems by using an actively shaped parabolic spectrum" OPTICS EXPRESS OPTICAL SOCIETY OF AMERICA USA, Bd. 15, Nr. 25, 4. Dezember 2007 (2007-12-04), Seiten 16945-16953, XP002572769 ISSN: 1094-4087**
• **KIMIHISHA OHNO ET AL.: "Adaptive pulse shaping of phase and amplitude of an amplified femtosecond pulse laser by direct reference to frequency-resolved optical gating traces" JOURNAL OF THE OPTICAL SOCIETY OF AMERICA B (OPTICAL PHYSICS) OPT. SOC. AMERICA USA, Bd. 19, Nr. 11, November 2002 (2002-11), Seiten 2781-2790, XP002572770 ISSN: 0740-3224**

EP 2 384 526 B1

**Beschreibung**

Die Erfindung betrifft eine Vorrichtung zum Verstärken von Lichtimpulsen, mit einem Strecker, der Lichtimpulse zeitlich streckt, wenigstens einem Verstärker, der die gestreckten Lichtimpulse verstärkt, und einem Kompressor, der die gestreckten und verstärkten Lichtimpulse rekomprimiert, wobei der Verstärker den gestreckten Lichtimpulsen eine durch Selbstphasenmodulation erzeugte nichtlineare Phase aufprägt. Des Weiteren betrifft die Erfindung ein Verfahren zum Verstärken von Lichtimpulsen.

Derartige Vorrichtungen sind bekannt und finden beispielsweise Einsatz bei der Erzeugung hochenergetischer Laserimpulse. Dabei werden meist ultrakurze Lichtimpulse, die eine Pulsdauer im Bereich von Pikosekunden oder Femtosekunden aufweisen, bis in den Petawatt-Bereich verstärkt.

Um Schäden an optischen Elementen sowie Limitierungen durch nichtlineare Effekte zu vermeiden, werden die ultrakurzen Lichtimpulse zunächst durch einen Strecker geführt, der die Lichtimpulse durch Dispersion zeitlich streckt. Dabei erhalten die Lichtimpulse eine längere Pulsdauer und eine geringere Amplitude. Die zeitlich gestreckten Lichtimpulse werden anschließend durch einen Verstärker, beispielsweise eine optisch gepumpte Verstärkerfaser, verstärkt, ohne dass es zu Schäden an den optischen Elementen des Verstärkers oder zu unerwünschten Nichtlinearitäten kommen kann. Die zeitlich gestreckten und verstärkten Lichtimpulse werden anschließend durch einen Kompressor, wiederum mittels Dispersion, rekomprimiert. Dabei erhalten die Lichtimpulse die gewünschte hohe Intensität und kurze Pulsdauer.

Das vorbeschriebene Verstärkungsprinzip wird auch als Chirp-modulierte Pulsverstärkung (CPA - Chirped Pulse Amplification) bezeichnet. Bei CPA-Systemen ist es bekannt, dem anfänglichen ultrakurzen Lichtimpuls mittels eines Streckers, der als Element normaler Dispersion ausgebildet ist, einen positiven Chirp aufzuprägen. Dieser wird nach der Verstärkung durch den Kompressor, der entsprechend als Element anormaler Dispersion ausgebildet ist, kompensiert. Konventionelle Elemente zur Erzeugung des positiven Chirps sind beispielsweise Gitterstrecker (z.B. vom Typ Öffner), aber auch gechirpte Fasergitter oder gechirpte Volumengitter, wobei der positive Chirp nach dem Verstärken der Lichtimpulse durch einen aus einem geeigneten Gitterpaar bestehenden Gitterkompressor kompensiert wird.

Von Nachteil bei solchen CPA-Systemen ist, dass trotz des zeitlichen Streckens der Lichtimpulse und der damit verbundenen verminderten Pulsspitzenleistung im Verstärker bei steigender extrahierter Pulsenergie der Einfluss der Selbstphasenmodulation (SPM) als störender nichtlinearer Effekt niedrigster Ordnung auftritt. Faserbasierte Verstärker sind aufgrund ihrer Geometrie besonders anfällig für diesen Effekt. Die durch Selbstphasenmodulation aufgeprägte nichtlineare Phase lässt sich wie folgt darstellen:

$$d\phi_{SPM}(z,T) = \gamma \left| A(z,T) \right|^2 dz \,,$$

wobei $\gamma$ für einen nichtlinearen Parameter, A für die zeitliche Lichtimpulsamplitude und z für die Propagationsstrecke des Lichtimpulses durch den Verstärker stehen. Diese nichtlineare Phase besitzt für konventionelle Lichtimpulsformen, wie beispielsweise eine Sekans-Hyperbolicus-Lichtimpulsform, Anteile, welche nicht-parabolische Phasenterme aufweisen. Diese lassen sich durch den in erster Ordnung linearen Chirp des Kompressors nicht kompensieren, was zu einer Verschlechterung der komprimierten Lichtimpulsqualität beziehungsweise zu einer Verringerung der Lichtimpulsspitzenleistung nach der Kompression führt. Als Maß für die aufgeprägte nichtlineare Phase wird das sogenannte B-Integral verwendet, welches als Integration der maximalen durch Selbstphasenmodulation erzeugten nichtlinearen Phase im Peak des Pulses über die Propagationsstrecke hinweg definiert ist:

$$B = \frac{2\pi}{\lambda_z} \int_0^L n_2 I(z) dz \,,$$

wobei I(z) die ortsabhängige Lichtimpulsspitzenintensität darstellt, $n_2$ den nicht linearen Brechungsindex und $\lambda_z$ die Zentralwellenlänge der Lichtimpulse. Eine Verringerung der Lichtimpulsspitzenleistung und eine Verschlechterung der Lichtimpulsqualität sind mit steigendem Wert des B-Integrals zu erkennen. Man unterscheidet hierbei die lineare Verstärkung bei $B < \pi$ rad von der nichtlinearen Verstärkung bei $B > \pi$ rad.

Ein bekannter Ansatz, die Problematik der Verschlechterung der Pulsqualität mit steigender Nichtlinearität zu umgehen, ist die Pulsformung.

Bekannt ist, dass durch einen ausreichend großen Chirp, d.h., durch eine ausreichend große Streckung der Lichtimpulse, die spektrale Amplitude in den Zeitbereich übertragbar ist, d.h., spektrales Formen entspricht zeitlichem Formen in einem CPA-System. Zum Beispiel können parabolische Pulse verstärkt werden. Diese Lichtimpulsform ist in erster Näherung immun gegenüber durch Selbstphasenmodulation aufgeprägten, nichtlinearen Phasenanteilen. Das heißt, dass ausgehend von einer parabolischen Lichtimpulsform die durch Selbstphasenmodulation erzeugte, nichtlineare Phase wiederum nur zu einer parabolischen Phasenform führt, was einem linearen Chirp entspricht. Dieser kann durch die dispersiven Elemente der Strecker- und Kompressoranordnung im CPA-System vollständig kompensiert werden.

Aufgabe der vorliegenden Erfindung ist es, eine gegenüber dem Stand der Technik verbesserte Vorrichtung beziehungsweise ein entsprechendes Verfahren zum Verstärken von Lichtimpulsen bereitzustellen, welche eine Verschlechterung der Lichtimpulsqualität und Verringerung der effektiven Lichtimpulsspitzenleistung bei steigendem Wert des B-Integrals weitestgehend verhindern.

Diese Aufgabe wird erfindungsgemäß ausgehend von einer Vorrichtung der eingangs genannten Art dadurch gelöst, dass im Strahlengang vor dem Verstärker angeordnete Mittel zur spektralen Formung der Lichtimpulse vorgesehen sind, wobei die Mittel zu spektralen Formung der Lichtimpulse eine spektrale Beschneidung der Lichtimpulse bewirken.

Erfindungsgemäß kann eine Verschlechterung der Lichtimpulsqualität und eine Verringerung der effektiven Lichtimpulsspitzenleistung bei steigender durch Selbstphasenmodulation erzeugter, nichtlinearer Phase durch spektrales Beschneiden der Lichtimpulse bereits im Strahlengang vor dem Verstärker deutlich verringert werden.

Die Erfindung basiert auf der Erkenntnis, dass ein spektral beschnittener Lichtimpuls hinsichtlich der Verstärkung mittels eines CPA-Systems weitgehend tolerant gegenüber der nichtlinearen, durch Selbstphasenmodulation erzeugten Phase ist. Gemäß der Erfindung wird durch das spektrale Beschneiden dafür gesorgt, dass im Wesentlichen diejenigen Anteile des Lichtimpulses verstärkt werden, deren nichtlineare Phase durch parabolische Anteile dominiert ist.

Spektrale Beschneidung im Sinne der Erfindung bedeutet insbesondere scharfe Beschneidung (engl. "hard cut"). Diese kann zum Beispiel gezielt durch das optische Arrangement mit einer als Strecker verwendeten Gitteranordnung vorgegeben werden. Hierzu kann z.B. eine Gitteranordnung gewählt werden, die aufgrund ihrer Dimensionierung eine bestimmte spektrale Bandbreite abdeckt (d.h. die nicht abgedeckten Bereiche des Spektrums werden scharf abgeschnitten) und gleichzeitig für den abgedeckten spektralen Bereich eine maximale Streckung erzeugt, d.h. diejenige zeitliche Dehnung, die aufgrund der Dimensionierung der Gitteranordnung maximal möglich ist.

Nach einer vorteilhaften Ausgestaltung der Erfindung erfolgt die spektrale Beschneidung der Lichtimpulse in der Weise, dass die beschnittenen Lichtimpulse eine weitgehend symmetrische Impulsform in der Zeitdomäne haben. Falls nämlich in dem CPA-System Dispersion höherer Ordnung eine Rolle spielt (z.B. bei Verwendung hochdispersiver Gitter als Strecker), kann dies zu einer Asymmetrie der gestreckten Lichtimpulse führen. Es sollte dann dafür gesorgt werden (z.B. durch asymmetrisches spektrales Beschneiden der Lichtimpulse), dass die gestreckten Lichtimpulse eine mehr oder weniger symmetrische Impulsform in der Zeitdomäne haben. So wird sichergestellt, dass im Sinne der Erfindung die nichtlineare Phase der Lichtimpulse nach der Verstärkung wiederum durch (kompensierbare) parabolische Anteile dominiert ist.

Gemäß einer weiteren vorteilhaften Ausgestaltung der Erfindung ist der Strecker als Gitter-Strecker ausgebildet, dessen Beugungsgitter die Mittel zur spektralen Formung der Lichtimpulse bilden. Gemäß dieser Ausgestaltung sind in dem CPA-System an sich herkömmlicher Ausgestaltung keine zusätzlichen Komponenten nötig, sondern die erfindungsgemäße Funktionalität wird durch geeignete Wahl bzw. Ausgestaltung der Beugungsgitters des Streckers realisiert. Dies kann im einfachsten Fall durch geeignete Bemessung der Beugungsgitter erfolgen, nämlich so, dass die unerwünschten Teile des Spektrums der Lichtimpulse abgeschnitten werden. Allgemein können im Sinne der Erfindung die optischen Komponenten der Streckeranordnung gezielt so ausgelegt sein, dass diese die gewünschte spektrale Beschneidung bewirken.

Eine weitere vorteilhafte Ausgestaltung der Erfindung sieht vor, dass der Strecker so ausgelegt ist, dass dieser die spektral geformten Lichtimpulse maximal zeitlich streckt. Hierdurch können Lichtimpulse mit sehr großen Amplituden beziehungsweise Lichtimpulsspitzenleistungen mit der erfindungsgemäßen Vorrichtung verstärkt werden, und zwar ohne dass die Lichtimpulsqualität oder Lichtimpulsspitzenleistung der rekomprimierten Lichtimpulse unter Nichtlinearitäten leidet. Der maximale Streckungsfaktor des Streckers ist (bei einem Gitter-Strecker) durch die Größe der Gitter (in Richtung quer zu den Stegen der Gitter) bestimmt. Z.B. bei einem Gitterstrecker kann das optische Arrangement stets so angepasst werden, dass das betreffende Gitter den gewünschten Spektralbereich genau abdeckt und die entsprechende maximale Streckung erzeugt. Das bedeutet, dass sich gemäß der Erfindung die Möglichkeit ergibt, die für ein bestimmtes B-Integral optimale bzw. notwendige Bandbreite des Lichtimpulses stärker (gegenüber dem Fall ohne Beschneidung) zu dehnen und somit eine höhere Lichtimpulsenergie bei gegebenem B-Integral extrahieren zu können.

Weiter wird vorgeschlagen, dass der Wert des B-Integrals des Verstärkers > $\pi$ rad (= 180°) ist. Das bedeutet, dass es sich nach dieser Ausgestaltung bei dem Verstärker gezielt um einen nichtlinearen Verstärker handelt.

Vorteilhafterweise liegt der Wert des B-Integrals zwischen $\pi$ rad (= 180°) und $2\pi$ rad (= 360°), wobei die spektrale Formung der Lichtimpulse in der Weise erfolgt, dass die spektrale Breite der rekomprimierten Lichtimpulse auf das 1,0 bis 2,0 fache der Halbwertbreite (FWHM) der unbeschnittenen Lichtimpulse beschnitten ist. Diese Parametrisierung bewirkt, dass es zu einer deutlichen Erhöhung der erzielbaren Lichtimpulsspitzenleistung kommt.

Eine hierzu alternative vorteilhafte Ausgestaltung der Erfindung sieht vor, dass der Wert des B-Integrals > $2\pi$ rad (= 360°) ist, wobei die spektrale Formung der Lichtimpulse in der Weise erfolgt, dass die spektrale Breite der rekomprimierten Lichtimpulse auf das 0,75 bis 1,5 fache der Halbwertbreite der unbeschnittenen Lichtimpulse beschnitten ist. In diesem Wertebereich lässt sich die mit der Vorrichtung erzeugte Lichtimpulsspitzenleistung auf ein Optimum bringen.

Bei einem B-Integral-Wert von beispielsweise 10 rad erreicht man bei einer Beschneidung der spektralen Breite der rekomprimierten Lichtimpulse auf das 1,25-fache der Halbwertsbreite der unbeschnittenen Lichtimpulse bereits eine 1,1-fache Lichtimpulsspitzenleistung im Vergleich zu dem Fall ohne Beschneidung, bei dem die spektrale Breite der rekomprimierten Lichtimpulse das 4-fache der Halbwertsbreite der unbeschnittenen Lichtimpulse beträgt. Jedoch kann man bei Beschneidung auf das 1,25-fache der Halbwertsbreite die Lichtimpulse bei identischen Gitterdimensionen mehr als 3-fach stärker strecken und kann demzufolge mehr als die 3-fache Energie extrahieren, um wieder eine nichtlineare Phase mit einem B-Integral-Wert von 10 rad aufzuprägen, was eine Steigerung der Lichtimpulsspitzenleistung um einen Faktor > 3 ermöglicht.

Gemäß der Erfindung soll die folgende Situation angestrebt werden: Bei gegebenem notwendigen Verstärkungsfaktor ist die spektrale Charakteristik des Verstärkers bekannt, die von der Zentralwellenlänge der Lichtimpulse abhängen kann. Entsprechend wird eine spektrale Verteilung am Ausgang des Verstärkers eingestellt, welche als Bandbreite die Breite der Verstärkercharakteristik inklusive Gain-Narrowing oder eine geringere Bandbreite aufweist. Das weitgehend scharfkantige spektrale Beschneiden soll durch eines der Elemente vor dem Hauptverstärker, z.B. im Strecker, vorzugsweise dem entsprechenden Gitter, erzeugt werden, um einen maximalen Streckungsfaktor zu erlauben.

Ausdrücklich sollen gestreckte Rechteckpulse, also Lichtimpulse mit rechteckiger spektraler Form, ausgeschlossen sein. Nachteile dieser Lichtimpulsform sind die verschlechterte Lichtimpulsqualität und Lichtimpulsspitzenleistung im Vergleich zu einem Gauss-, sech$^2$-förmigen oder ähnlichen Spektrum, die höhere Anfälligkeit der spektralen Formung beziehungsweise Deformierung entsprechend der Verstärkercharakteristik und/oder durch Sättigungseffekte sowie die höheren Anforderungen an die spektrale Breite der Seedquelle. Es wird im Sinne der Erfindung vielmehr vorgeschlagen, dass die Lichtimpulse eine parabolische Impulsform, eine sech$^2$-Impulsform oder eine Gauss-Impulsform aufweisen. Diese Impulsformen sind bei Beschneidung weitestgehend immun gegen Selbstphasenmodulation und bringen eine hohe Lichtimpulsspitzenleistung und Lichtimpulsqualität mit sich.

Zur Lösung der obigen Aufgabe wird des Weiteren ein Verfahren zum Verstärken von Lichtimpulsen vorgeschlagen, wobei mittels eines Streckers Lichtimpulse zeitlich gestreckt werden, mittels wenigstens eines Verstärkers die gestreckten Lichtimpulse verstärkt werden, wobei den Lichtimpulsen eine durch Selbstphasenmodulation erzeugte nichtlineare Phase aufgeprägt wird, und mittels eines Kompressors die gestreckten und verstärkten Lichtimpulse rekomprimiert werden.

Erfindungsgemäß werden die Lichtimpulse im Strecker oder nach dem Strecker und vor dem Verstärker spektral geformt, wobei die spektrale Formung eine spektrale Beschneidung der Lichtimpulse ist. Dies führt zu den oben im Zusammenhang mit der Vorrichtung genannten Vorteilen gegenüber dem Stand der Technik.

Weitere Vorteile und Merkmale der vorliegenden Erfindung werden im Folgenden anhand der in den Figuren gezeigten Ausführungsbeispiele erläutert. Dabei zeigen:

Figur 1:      eine schematische Darstellung eines Ausführungsbeispiels der erfindungsgemäßen Vorrichtung,

Figur 2a:      ein Beispiel für die spektrale Beschneidung eines Lichtimpulses,

Figur 2b:      Auswirkungen der in Figur 2a gezeigten Beschneidung,

Figur 3a:      ein Beispiel für asymmetrisches spektrales Beschneiden eines Lichtimpulses, und

Figur 3b:      die Auswirkung des Beschneidens der Figur 3a im Zeitbereich.

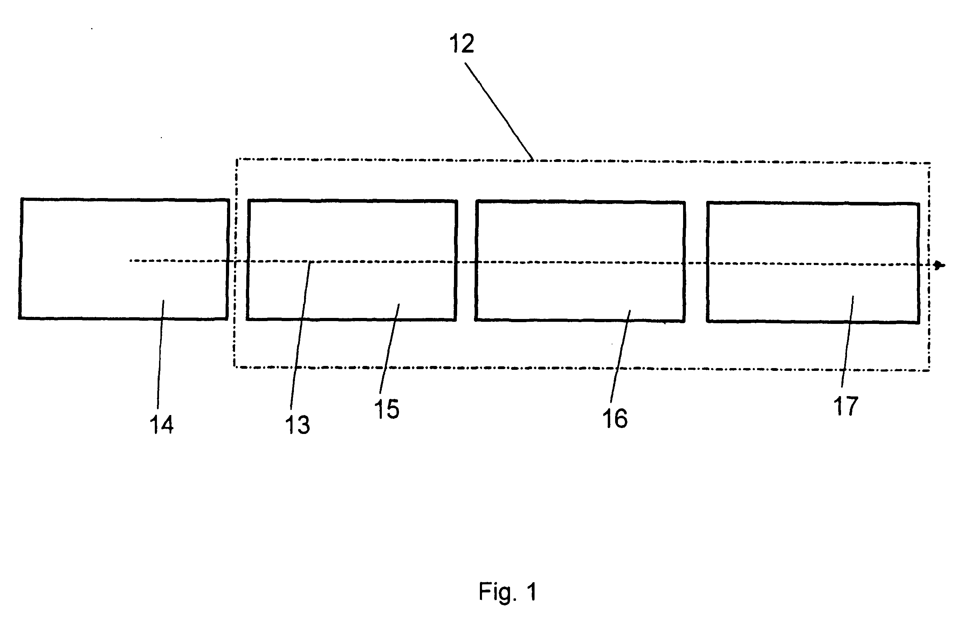

Figur 1 zeigt eine Ausführungsform der erfindungsgemäßen Vorrichtung 12 zum Verstärken von Lichtimpulsen 13. Die Lichtimpulse 13 werden von einer Kurzpulsquelle 14, z.B. einem Kurzpulsoszillator oder einem bereits verstärkten Kurzpulsoszillator, erzeugt und anschließend durch den Strecker 15 zeitlich gestreckt. Im Anschluss an die zeitliche Streckung der Lichtimpulse 13 erfolgt ein Verstärken derselben mittels des wenigstens einen Verstärkers 16 oder alternativ durch mehrere Verstärker 16 in Form einer Verstärkerkette. Nach Verstärkung der Lichtimpulse 13 werden diese durch den Kompressor 17 zeitlich rekomprimiert, so dass letztendlich kurze Lichtimpulse hoher Intensität bereitgestellt werden.

Der in Figur 1 insgesamt gezeigte Aufbau entspricht im Wesentlichen einem CPA-System. Bei diesem CPA-System bzw. der gezeigten Ausführungsform der erfindungsgemäßen Vorrichtung 12 erfolgt eine spektrale Beschneidung der Lichtimpulse durch ein Gitter des als Gitter-Strecker ausgebildeten Streckers 15, um die durch Selbstphasenmodulation im Verstärker 16 erzeugte nichtlineare Phase zu kompensieren. Es sind keine weiteren Bauelemente erforderlich, so dass insgesamt die Vorrichtung 12 einen sehr einfachen und kompakten Aufbau hat.

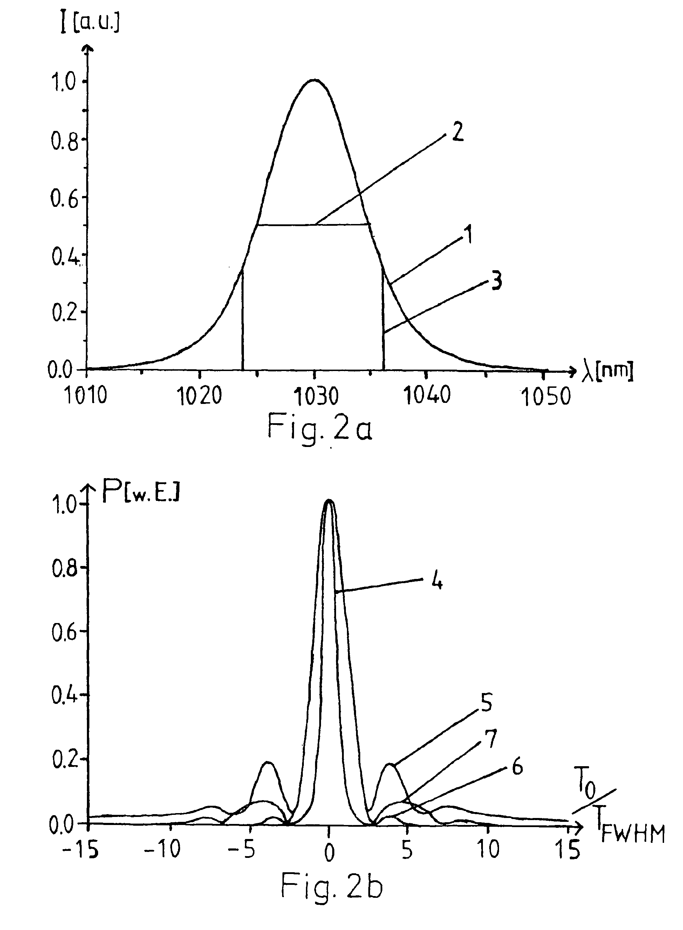

Figur 2a zeigt beispielhaft das symmetrische spektrale Beschneiden eines Lichtimpulses 1, der eine Halbwertbreite 2 (FWHM) von 10 nm aufweist. Die spektrale Breite des beschnittenen Lichtimpulses 3 beträgt das 1,25 fache der Halbwertbreite 2, beträgt also 12,5 nm. Aufgetragen ist spektrale Intensität I gegen die Wellenlänge $\lambda$.

Figur 2b zeigt die Auswirkungen eines Beschneidens gemäß Figur 2a in einem nichtlinearen CPA-System. Aufgetragen sind die zeitlichen Intensitätsprofile (normierte Leistung P) der rekomprimierten Lichtimpulse gegen die normierte Zeit $T_0/T_{FWHM}$. Betrachtet ist im gesamten CPA-System nur Dispersion 2. Ordnung (GVD). Höhere Ordnungen spielen eine untergeordnete Rolle. Das transform-limitierte Intensitätsprofil 4 wird ohne eine Beschneidung des in Figur 1 gezeigten Lichtimpulses 1 und einem B-Integral-Wert von 0, also bei linearer Verstärkung, erzeugt. Intensitätsprofil 5 wird ebenfalls ohne Beschneidung des Lichtimpulses 1 erzeugt, wobei jedoch der Wert des B-Integrals $3\pi$ rad ist, was eine nichtlineare Verstärkung des Lichtimpulses 1 bedeutet. Es sind größere Nebenmaxima zu erkennen, welche durch die störende, durch Selbstphasenmodulation erzeugte, nichtlineare Phase hervorgerufen werden. Zudem wird eine Verbreiterung des zentralen Peaks gegenüber dem Intensitätsprofil 4 durch die nichtlineare Phase verursacht. Bezugszeichen 6 bezeichnet ein durch Beschneidung des Lichtimpulses 1 erzeugtes Intensitätsprofil, wobei die Beschneidung derart erfolgt, dass die spektrale Breite des beschnittenen Lichtimpulses 1,25 mal so groß wie die Halbwertsbreite 2 des Lichtimpulses 1 ist. Der Wert des B-Integrals ist 0, so dass eine lineare Verstärkung des Lichtimpulses 1 erfolgt. Dieses Intensitätsprofil 6 entspricht bis auf die kleinen Nebenmaxima dem Intensitätsprofil 4. Bezugszeichen 7 bezeichnet ein Intensitätsprofil, das bei gleicher Beschneidung wie im vorhergehenden Fall, jedoch bei einem B-Integral-Wert von $3\pi$ rad, also bei nichtlinearer Verstärkung des Lichtimpulses 1 erzeugt wird. Die Nebenmaxima des Intensitätsprofils 7 sind deutlich geringer als bei dem Intensitätsprofil 5, was durch die erfindungsgemäße Beschneidung des Lichtimpulses 1 bei nichtlinearer Verstärkung desselben bewirkt wird. Es besteht im Übrigen kein signifikanter Unterschied zum vorhergehenden Fall mit linearer Verstärkung. Das bedeutet, ein spektraler beschnittener Lichtimpuls ist weitgehend tolerant gegenüber der durch Selbstphasenmodulation erzeugten, nichtlinearen Phase.

Dies ist begründet durch die Tatsache, dass die spektralen Anteile des Lichtimpulses 1, welche in unbeschnittenen Lichtimpulsen 1 eine starke Abweichung von parabolischen Anteilen der spektralen Phase besitzen, durch die Beschneidung keinen Leistungsinhalt mehr aufweisen.

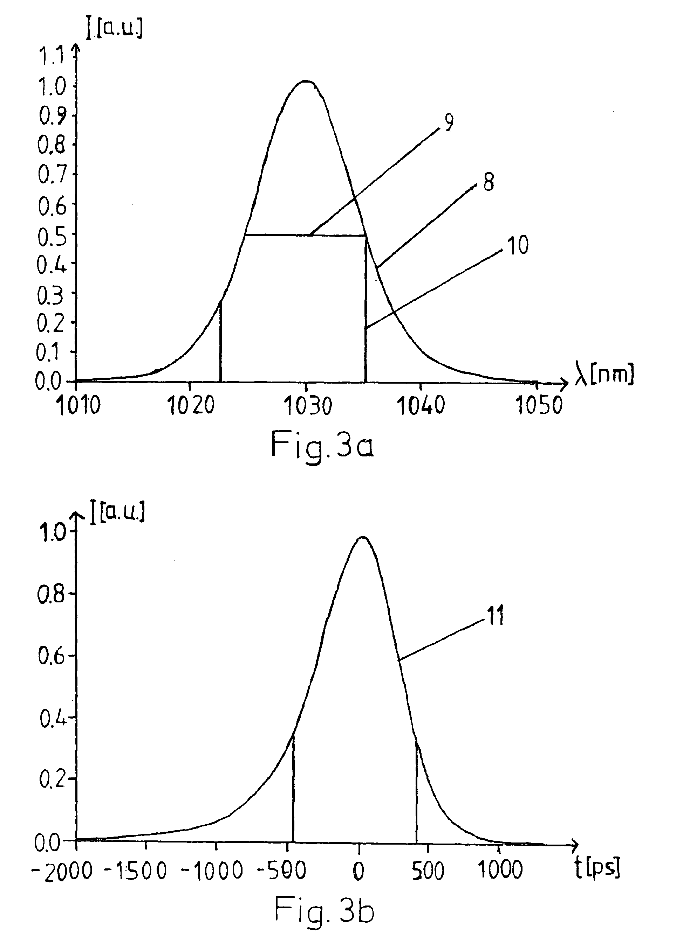

Figur 3a zeigt ein Beispiel für das asymmetrische spektrale Beschneiden eines Lichtimpulses 8. Dargestellt ist ein sech²-Lichtimpuls 8 mit einer spektralen Bandbreite 9 von 10 nm bei 1030 nm Zentralwellenlänge. Dieser Lichtimpuls 8 wird mit Phasen $\varphi_2$=40,2 ps² und $\varphi_3$=1,226 ps³ gestreckt, was einer Littrow-Konfiguration eines 1840 l/mm Gitters und einem effektiven Gitterabstand von 0,2 m entspricht. Deutlich zu erkennen ist die Asymmetrie des gestreckten Lichtimpulses 8. Wird dieser Lichtimpuls 8 asymmetrisch spektral beschnitten, was durch die mit dem Bezugszeichen 10 bezeichneten Linien verdeutlich werden soll, ergibt sich im Zeitbereich ein im Wesentlichen symmetrisch beschnittener, gestreckter Lichtimpuls 11, wie er beispielhaft in Figur 3b gezeigt ist.

**Patentansprüche**

1. Vorrichtung zum Verstärken von Lichtimpulsen, mit einem Strecker (15), der Lichtimpulse (13) zeitlich streckt, wenigstens einem Verstärker (16), der die gestreckten Lichtimpulse verstärkt, und einem Kompressor (17), der die gestreckten und verstärkten Lichtimpulse rekomprimiert, wobei der Verstärker (16) den gestreckten Lichtimpulsen eine durch Selbstphasenmodulation erzeugte nichtlineare Phase aufprägt,
**gekennzeichnet durch** im Strahlengang vor dem Verstärker (16) angeordnete Mittel zur spektralen Formung der Lichtimpulse, wobei die Mittel zur spektralen Formung der Lichtimpulse eine scharfe spektrale Beschneidung der Lichtimpulse bewirken, wobei die spektrale Beschneidung der Lichtimpulse in der Weise erfolgt, dass die beschnittenen Lichtimpulse eine symmetrische Impulsform in der Zeitdomäne haben.

2. Vorrichtung nach Anspruch 1, **dadurch gekennzeichnet, dass** der Strecker als Gitter-Strecker ausgebildet ist, dessen Beugungsgitter die Mittel zur spektralen Formung der Lichtimpulse bilden.

3. Vorrichtung nach Anspruch 1 oder 2, **dadurch gekennzeichnet, dass** der Strecker als gechirptes Fasergitter oder Volumengitter ausgebildet ist, dessen spektrale Eigenschaften die spektralen Formung der Lichtimpulse bewirken.

4. Vorrichtung nach einem der Ansprüche 1 bis 3, **dadurch gekennzeichnet, dass** der Wert des B-Integrals des Verstärkers > $\pi$ rad (= 180°) ist.

5. Vorrichtung nach Anspruch 4, **dadurch gekennzeichnet, dass** der Wert des B-Integrals zwischen $\pi$ rad (= 180°) und $2\pi$ rad (= 360°) liegt, wobei die spektrale Formung der Lichtimpulse in der Weise erfolgt, dass die spektrale Breite der rekomprimierten Lichtimpulse auf das 1,0- bis 2,0-fache der Halbwertsbreite der unbeschnittenen Lichtimpulse beschnitten ist.

6. Vorrichtung nach Anspruch 4, **dadurch gekennzeichnet, dass** der Wert des B-Integrals größer als $2\pi$ rad (= 360°) ist, wobei die spektrale Formung der Lichtimpulse in der Weise erfolgt, dass die spektrale Breite der rekomprimierten Lichtimpulse auf das 0,75- bis 1,5-fache der Halbwertsbreite der unbeschnittenen Lichtimpulse beschnitten ist.

7.  Vorrichtung nach einem der vorhergehenden Ansprüche, **dadurch gekennzeichnet, dass** die Lichtimpulse eine parabolische Impulsform, eine sech²-Impulsform oder eine Gauß-Impulsform aufweisen.

8.  Verfahren zum Verstärken von Lichtimpulsen, wobei

    - mittels eines Streckers Lichtimpulse zeitlich gestreckt werden,
    - mittels wenigstens eines Verstärkers die gestreckten Lichtimpulse verstärkt werden, wobei den Lichtimpulsen eine durch Selbstphasenmodulation erzeugte nichtlineare Phase aufgeprägt wird, und
    - mittels eines Kompressors die gestreckten und verstärkten Lichtimpulse rekomprimiert werden,

    **dadurch gekennzeichnet, dass** die Lichtimpulse im Strecker oder nach dem Strecker und vor dem Verstärker spektral geformt werden, wobei die spektrale Formung eine scharfe spektrale Beschneidung der Lichtimpulse ist, wobei die spektrale Beschneidung der Lichtimpulse in der Weise erfolgt, dass die beschnittenen Lichtimpulse eine symmetrische Impulsform in der Zeitdomäne haben.

9.  Verfahren nach Anspruch 8, **dadurch gekennzeichnet, dass** die spektrale Formung mittels eines Beugungsgitters des Streckers erfolgt.

10. Verfahren nach Anspruch 8 oder 9, **dadurch gekennzeichnet, dass** die spektral geformten Lichtimpulse entsprechend ihrer spektralen Breite maximal zeitlich gestreckt werden.

11. Verfahren nach einem der Ansprüche 8 bis 10, **dadurch gekennzeichnet, dass** der Wert des B-Integrals des Verstärkers zwischen $\pi$ rad (= 180°) und $2\pi$ rad (= 360°) liegt, wobei die spektrale Formung der Lichtimpulse in der Weise erfolgt, dass die spektrale Breite der rekomprimierten Lichtimpulse auf das 1,0- bis 2,0-fache der Halbwertsbreite der unbeschnittenen Lichtimpulse beschnitten ist.

12. Verfahren nach einem der Ansprüche 8 bis 10, **dadurch gekennzeichnet, dass** der Wert des B-Integrals des Verstärkers größer als $2\pi$ rad (= 360°) ist, wobei die spektrale Formung der Lichtimpulse in der Weise erfolgt, dass die spektrale Breite der rekomprimierten Lichtimpulse auf das 0,75-bis 1,5-fache der Halbwertsbreite der unbeschnittenen Lichtimpulse beschnitten ist.

13. Verfahren nach einem der Ansprüche 8 bis 12, **da-**

**durch gekennzeichnet, dass** Lichtimpulse mit einer parabolischen Impulsform, einer sech²-Impulsform oder einer Gauß-Impulsform verwendet werden.

**Claims**

1.  Device for amplifying light pulses, having a stretcher (15) that temporally stretches the light pulses (13), at least one amplifier (16) that amplifies the stretched light pulses, and a compressor (17) that recompresses the stretched and amplified light pulses, wherein the amplifier (16) imprints a non-linear phase generated by means of self-phase modulation onto the stretched light pulses,
    **characterized by**
    means for spectral shaping of the light pulses, disposed in the beam path ahead of the amplifier (16), wherein the means for spectral shaping of the light pulses bring about spectral trimming of the light pulses, wherein the spectral trimming of the light pulses takes place in such a manner that the trimmed light pulses have an essentially symmetrical pulse shape in the time domain.

2.  Device according to claim 1, **characterized in that** the stretcher is configured as a grating stretcher, the refraction gratings of which form the means for spectral shaping of the light pulses.

3.  Device according to claim 1 or 2, **characterized in that** the stretcher is configured as a chirped fiber grating or volume grating, the spectral properties of which bring about the spectral shaping of the light pulses.

4.  Device according to one of claims 1 to 3, **characterized in that** the value of the B integral of the amplifier is > $\pi$ rad (= 180°).

5.  Device according to claim 4, **characterized in that** the value of the B integral lies between $\pi$ rad (= 180°) and $2\pi$ rad (= 360°), wherein the spectral shaping of the light pulses takes place in such a manner that the spectral width of the recompressed light pulses is trimmed to 1,0 to 2,0 times the full width at half maximum of the untrimmed light pulses.

6.  Device according to claim 4, **characterized in that** the value of the B integral is greater than $2\pi$ rad (= 360°), wherein the spectral shaping of the light pulses takes place in such a manner that the spectral width of the recompressed light pulses is trimmed to 0,75 to 1,5 times the full width at half maximum of the untrimmed light pulses.

7.  Device according to one of the preceding claims, **characterized in that** the light pulses have a parabolic pulse shape, a sech$^2$ pulse shape, or a Gauss pulse shape.

8. Method for amplifying light pulses, wherein

   - light pulses are temporally stretched by means of a stretcher,
   - the stretched light pulses are amplified by means of at least one amplifier, wherein a non-linear phase generated by means of self-phase modulation is imprinted onto the stretched light pulses,
   - the stretched and amplified light pulses are recompressed by means of a compressor,

   **characterized in that**
   the light pulses are spectrally shaped in the stretcher or after the stretcher and ahead of the amplifier, wherein the spectral shaping is spectral trimming of the light pulses, wherein the spectral trimming of the light pulses takes place in such a manner that the trimmed light pulses have a symmetrical pulse shape in the time domain.

9. Method according to claim 8, **characterized in that** the spectral shaping takes place by means of the refraction grating of the stretcher.

10. Method according to claim 8 or 9, **characterized in that** the spectrally shaped light pulses are maximally temporally stretched, in accordance with their spectral width.

11. Method according to one of claims 8 to 10, **characterized in that** the value of the B integral of the amplifier lies between $\pi$ rad (= 180°) and $2\pi$ rad (= 360°), wherein the spectral shaping of the light pulses takes place in such a manner that the spectral width of the recompressed light pulses is trimmed to 1,0 to 2,0 times the full width at half maximum of the untrimmed light pulses.

12. Method according to one of claims 8 to 10, **characterized in that** the value of the B integral of the amplifier is greater than $2\pi$ rad (= 360°), wherein the spectral shaping of the light pulses takes place in such a manner that the spectral width of the recompressed light pulses is trimmed to 0,75 to 1,5 times the full width at half maximum of the untrimmed light pulses.

13. Method according to one of claims 8 to 12, **characterized in that** light pulses having a parabolic pulse shape, a sech$^2$ pulse shape, or a Gauss pulse shape are used.

**Revendications**

1. Dispositif pour amplifier des impulsions de lumière, avec un allongeur (15), qui allonge dans le temps les impulsions de lumière (13), au moins un amplificateur (16) qui amplifie les impulsions de lumière allongées, et un compresseur (17) qui recomprime les impulsions de lumière allongées et amplifiées, l'amplificateur (16) imprimant aux impulsions de lumière une phase non linéaire engendrée par automodulation de phase,
   **caractérisé par**
   des moyens disposés dans le trajet des rayons en amont de l'amplificateur (16) pour le formage spectral des impulsions de lumière, les moyens pour le formage spectral des impulsions de lumière provoquant un rognage spectral aigu des impulsions de lumière, le rognage spectral des impulsions de lumière s'effectuant de telle sorte que les impulsions de lumière rognées aient une forme d'impulsion symétrique dans le domaine du temps.

2. Dispositif selon la revendication 1, **caractérisé en ce que** l'allongeur est configuré comme un allongeur à grille, dont la grille de diffraction forme les moyens de formage spectral des impulsions de lumière.

3. Dispositif selon la revendication 1 ou 2, **caractérisé en ce que** l'allongeur est configuré comme grille de fibres ou grille volumique « chirpée », dont les propriétés spectrales provoquent le formage spectral des impulsions de lumière.

4. Dispositif selon l'une quelconque des revendications 1 à 3, **caractérisé en ce que** la valeur de l'intégrale B de l'amplificateur est > n rad (= 180°).

5. Dispositif selon la revendication 4, **caractérisé en ce que** la valeur de l'intégrale B de l'amplificateur est comprise entre n rad (= 180°) et 2n rad (= 360°), le formage spectral des impulsions de lumière s'effectuant de telle sorte que la largeur spectrale des impulsions de lumière recomprimées soit rognée jusqu'à être comprise entre 1,0 fois et 2,0 fois la largeur de demi-valeur des impulsions de lumière non rognées.

6. Dispositif selon la revendication 4, **caractérisé en ce que** la valeur de l'intégrale B est supérieure à 2n rad (= 360°), le formage spectral des impulsions de lumière s'effectuant de telle sorte que la largeur spectrale des impulsions de lumière recomprimées soit rognée jusqu'à être comprise entre 0,75 fois et 1,5 fois la largeur de demi-valeur des impulsions de lumière non rognées.

7. Dispositif selon l'une quelconque des revendications précédentes, **caractérisé en ce que** les impulsions de lumière ont une forme d'impulsion parabolique, en sech$^2$ ou de Gauss.

8. Procédé pour amplifier des impulsions de lumière, dans lequel

    - au moyen d'un allongeur, les impulsions de lumière sont allongées dans le temps,
    - au moyen d'au moins un amplificateur, les impulsions de lumière allongées sont amplifiées, une phase non linéaire produite par automodulation de phase leur étant imprimée et
    - au moyen d'un compresseur, les impulsions de lumière allongées et amplifiées sont de nouveau recomprimées,

    **caractérisé en ce que**
les impulsions de lumière sont formées spectralement dans l'allongeur ou en aval de l'allongeur et en amont de l'amplificateur, le formage spectral étant un rognage spectral aigu des impulsions de lumière, le rognage spectral des impulsions de lumière s'effectuant de telle sorte que les impulsions de lumière rognées aient une forme symétrique dans le domaine du temps.

9. Procédé selon la revendication 8, **caractérisé en ce que** le formage spectral s'effectue à l'aide d'une grille de diffraction de l'allongeur.

10. Procédé selon la revendication 8 ou 9, **caractérisé en ce que** les impulsions de lumière formées spectralement sont allongées dans le temps au maximum compte tenu de leur largeur spectrale.

11. Procédé selon l'une quelconque des revendications 8 à 10, **caractérisé en ce que** la valeur de l'intégrale B de l'amplificateur est comprise entre n rad (= 180°) et 2 n rad (= 360°), le formage spectral des impulsions de lumière s'effectuant de telle sorte que la largeur spectrale des impulsions recomprimées soit rognée jusqu'à être comprise entre 1,0 fois et 2,0 fois la largeur de demi-valeur des impulsions de lumière non rognées.

12. Procédé selon l'une quelconque des revendications 8 à 10, **caractérisé en ce que** la valeur de l'intégrale B de l'amplificateur est supérieure à $2\pi$ rad (= 360°), le formage spectral des impulsions de lumière s'effectuant de telle sorte que la largeur spectrale des impulsions de lumière recomprimées soit rognée jusqu'à être comprise entre 0,75 fois et 1,5 fois la largeur de demi-valeur des impulsions de lumière non rognées.

13. Procédé selon l'une quelconque des revendications 8 à 12, **caractérisé en ce que** les impulsions de lumière qui sont utilisées présentent une forme d'impulsion parabolique, en sech$^2$ ou de Gauss.

Fig. 1

Fig. 2a

Fig. 2b

I [a.u.]

Fig.3a

I [a.u.]

Fig. 3b